# EUROPEAN PATENT APPLICATION

(11) **EP 4 575 856 A1**
(43) Date of publication of application: **25.06.2025**
(21) Application number: 24205165.4
(22) Date of filing: 08.10.2024
(51) Int. Cl.: G06F 21/54

(54) **METHOD AND SYSTEM REINFORCING SOFTWARE AGAINST BACKWARD EDGE ATTACKS**

(30) Priority: 22.12.2023 EP 23307376
(71) Applicant: Commissariat à l'Energie Atomique et aux Energies Alternatives, 75015 Paris (FR)
(72) Inventor: BARDIN, Sébastien, 91191 GIF SUR YVETTE CEDEX (FR); RECOULES, Frédéric, 91191 GIF SUR YVETTE CEDEX (FR)
(74) Representative: Atout PI Laplace

(57) **Abstract**

A method is provided for hardening low level software code against Return-oriented programming attacks. It builds by modifying calls and return functions so as to enable a check for direct calls to verify that that the returning function was effectively the one called by the preceding call, limiting the capacity of the attacker to redirect the control flow. This may in particular involve associating calls with special tags whose presence and value can be checked by the return function, or by a tagless approach in which the return function is defined so as to look for characterizing features of a call function in a predetermined position with respect to the call instruction, based on known structures for the applicable computer architecture.

## Description

A well known technique for compromising software systems is Code injection. Such approaches are based on the exploitation of a computer bug that is caused by processing invalid data. The injection is used by an attacker to introduce (or "inject") code into a vulnerable computer program and change the course of execution. Originally most attacks involved data injection onto the stack and relied on the sent payload containing a shell-code. The shell code is a small piece of compiled code meant to open a shell with elevated permissions. The result of successful code injection can be disastrous, for example, by allowing computer viruses or computer worms to propagate.

Such traditional code-injection attacks are rendered ineffective in the presence of policies that prevent the execution of modifiable memory such as Data Execution Prevention (DEP) or (Write xor eXecute) rules, as discussed in the article by Vincent Abella Starr Andersen entitled " Memory protection technologies" available form https://docs.microsoft.com/en-us/previous-versions/windows/it-pro/windows-xp/bb457155(v=technet.10), published by Microsoft corporation as part 3 of "Changes to Functionality in Windows XP Service Pack 2" in August 2009., code-reuse attacks can alter the runtime behaviour of a program without modifying any of its executable code sections. Return-oriented programming (ROP) is an attack technique that corrupts function return addresses to hijack a program control flow. ROP can be used to achieve Turing-complete computation by chaining together code sequences from the victim's own program.

Return-oriented programming (ROP) is a way of bypassing DEP countermeasures. It is a technique to perform a predefined computation by reusing instructions already present in a program. The attacker seeks out small snippets of code, called gadgets, within the existing code-base, each ending in a return instruction (RET). These gadgets may perform memory load- /store operations, arithmetic, logic, system calls, etc. By stacking out malicious content full of ROP gadget addresses, the attacker can execute an arbitrary number of these gadgets. Further, since gadgets may affect the stack pointer itself, it is possible to construct conditional "branches", thus the execution of return-oriented gadgets need not be linear. This allows for attacker-controlled Turing complete computation in the context of the vulnerable application.

As an example of such an approach, we may consider the following starting code.

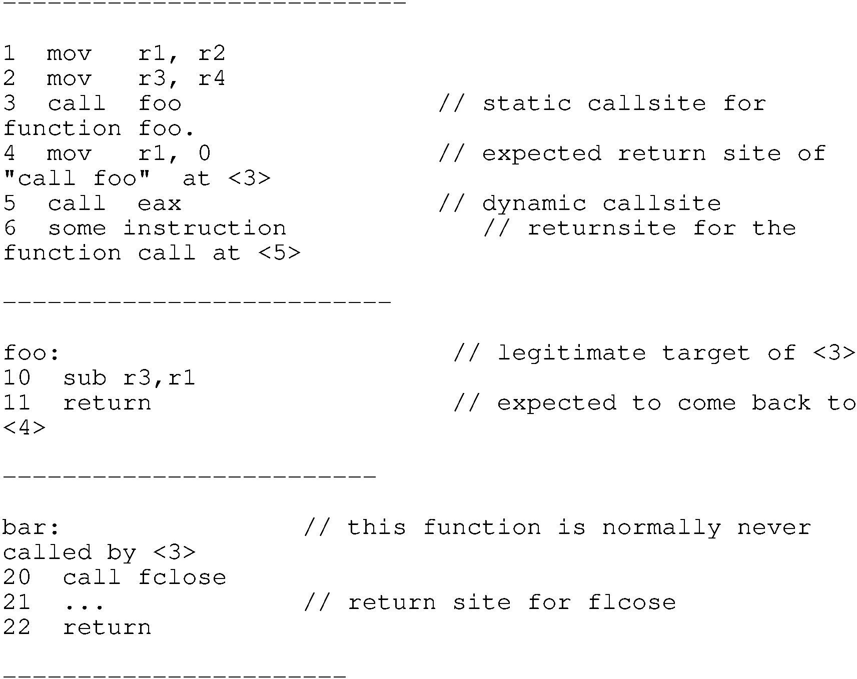

In such a case, the goal of the attacker : the attacker is in the foo function and controls part of the execution. Especially he can control the value of the return address. The expected return address for a non attacker is <4>, but the attacker may specify any other point in the code at his convenience.

ROP has been demonstrated on a variety of platforms, from x86 to RISCV to even embedded environments. While first performed manually by security experts, ROP attacks can now be partly automated. Control Flow Integrity (CFI) mechanisms for example as discussed in the article by Martin Abadi, Mihai Budiu, Úlfar Erlingsson, and Jay Ligatti. Entitled "Control-flow integrity" Published In Proceedings of the 12th ACM Conference on Computer and Communications Security, CCS '05, page 340-353, New York, NY, USA, 2005. Association for Computing Machinery, seek to prevent control-flow hijacking attacks. CFI schemes are commonly divided into forward-edge (check that the target observed at run-time of a call is in the set of valid targets) and backward-edge (check that a return address refers to a possible caller in the control-flow graph).

Control-flow integrity (CFI) is a general term for computer security techniques that prevent a wide variety of attacks from redirecting the control flow of a program. CFI provides runtime enforcement of the intended control flow transfers by forbidding transfers that are not present in the application Control Flow Graph (CFG). CFGs are constructed either by analyzing the source code, or by analyzing the disassembled binary, which gives a less accurate CFG. A way of enforcing the control flow integrity is done by assigning tags to indirect branch targets and checking that indirect control transfers point to valid tags. Precise enforcement of CFI can introduce significant overhead. There are two ways to differentiate between CFI schemes. On one hand, there are forward-edge approaches that check that the target observed at the run-time of a call is in the set of valid targets, and backward-edge ones that check that a return address refers to a possible caller in the control-flow graph. On the other, we have the implementation-based viewpoint, where we find software-only protections and hardware-assisted ones. Shadow Stack is one approach that has both software-only implementations and hardware-assisted ones.

At present, the most powerful protection against ROP is achieved by using an integrity-protected shadow stack that maintains a secure reference copy of every return address for example as set out in the article by Martin Abadi, Mihai Budiu, Úlfar Erlingsson, and Jay Ligatti. Entitled "Control-flow integrity principles, implementations, and applications" Published in ACM Trans. Inf. Syst. Secur., 13(1), nov 2009.

Recent software implementations of shadow stacks show reasonable performance, ranging from +5.33% to +15.57% runtime overhead on SPEC CPU 2006 benchmarks compared to older implementations whose overhead ranged between 10% and 40%, but are vulnerable to an adversary capable of exploiting memory vulnerabilities to infer the location of the shadow stack. More efficient implementations rely on specialized hardware, such as Intel CET (See the article by Hovav Shacham entitled "The geometry of innocent flesh on the bone: Return-into-libc without function calls (on the x86)" published In Proceedings of the 14th ACM Conference on Computer and Communications Security, CCS '07, page 552-561, New York, NY, USA, 2007. Association for Computing Machinery.)

Through the years more hardware assisted approaches, such as kBouncer as presented in the article by Vasilis Pappas, Michalis Polychronakis, and Angelos D. Keromytis entitled "Transparent ROP exploit mitigation using indirect branch tracing" Published In Proceedings of the 22nd USENIX Conference on Security, SEC13, page 447-462. USENIX Association, 2013, PACStack Hans Liljestrand, Thomas Nyman, Lachlan J. Gunn, Jan-Erik Ekberg, and N. Asokan. PACStack: an authenticated call stack. In 30th USENIX Security Symposium (USENIX Security 21), pages 357-374. USENIX Association, August 2021.and PAC it up Hans Liljestrand, Thomas Nyman, Kui Wang, Carlos Chinea Perez, Jan-Erik Ekberg, and N. Asokan. PAC it up: Towards pointer integrity using ARM pointer authentication. In 28th USENIX Security Symposium (USENIX Security 19), pages 177-194, Santa Clara, CA, August 2019. USENIX Association, have emerged to offer more powerful protections with a lower overhead.

On the other hand, the other proposed software-only protections such as stackguard as presented in the article by Crispin Cowan, Calton Pu, Dave Maier, Jonathan Walpole, Peat Bakke, Steve Beattie, Aaron Grier, Perry Wagle, Qian Zhang, and Heather Hinton. Entiled "Stackguard: Automatic adaptive detection and prevention of buffer-overflow attacks. In 7th USENIX Security Symposium (USENIX Security 98), San Antonio, TX, January 1998. USENIX Association or Control-Flow Integrity based approaches as discussed for example in the article by Caroline Tice, Tom Roeder, Peter Collingbourne, Stephen Checkoway, Úlfar Erlingsson, Luis Lozano, and Geoff Pike entitled "Enforcing Forward-Edge Control-Flow integrity in GCC & LLVM. In 23rd USENIX Security Symposium (USENIX Security 14), pages 941-955, San Diego, CA, August 2014. USENIX Association, suffer either from weak granularity or high performance overhead which limits their real-world implementations.

It is desired to provide a protection mechanism against ROP attacks offering further improved protection against automated attacks and minimal performance overhead.

### SUMMARY OF THE INVENTION

In accordance with the present invention in a first aspect there is provided a computer-implemented method for hardening software code against backward edge attacks comprising: obtaining a low level representation of the software code, replacing all return operations in the low level representation with a respective instance of a modified return operation defined such that when the modified return operation is executed, prior to returning to a return address stored for the modified return operation, a verification is performed to determine whether the instruction at the return address corresponds to a call instruction calling the function to which the respective instance of the modified return instruction belongs, and wherein the modified return operation only proceeds to return execution to the address stored for the modified return operation in a case where the instruction at the return address so corresponds to a call instruction.

In a development of the first aspect, the low level representation of the software code comprises one a machine code representation of the software code, an assembly language representation of the software code.

In a development of the first aspect, the low level representation of the software code comprises or a binary representation of the software code, and wherein the step of replacing is implemented by a binary rewriting technique.

In a development of the first aspect, the method comprises a further step of performing a compilation operation on the software code to obtain the low level representation.

In a development of the first aspect, the method comprises the further steps of incorporating in each instance of the modified return operation a representation of the address of the function to which the instance belongs, and determining for each call instruction whether the call is a static call, and in a case where a the call instruction is determined to be a static call, associating the call instruction with a unique identifier for the function called by the call instruction. The modified return operation is further defined such that the verification comprises determining whether the call instruction is a static call instruction by determining whether the unique identifier for the function associated with the call instruction corresponds to the function to which the instance of the modified return operation belongs, and in a case where the verification determines that the instruction at the return address is a static call instruction, comparing the address defined in the static call instruction with the address of the function to which the instance of the modified return operation belongs. The modified return operation only proceeds to return execution to the address stored for the modified return operation in a case where the static address of the function called by the call instruction corresponds with the address of the function to which the instance of the modified return operation belongs.

In a development of the first aspect, the method comprises the further step of identifying all call instructions in the low level representation, and adding in a predetermined position with respect to each the call instruction a characteristic data element, and wherein the modified return operation is further defined such that the verification comprises determining whether the characteristic data element is present in the predetermined position with respect to the return address.

In a development of the first aspect, the predetermined position immediately precedes the respective the call instruction.

In a development of the first aspect, the characteristic data element is embedded in a multi-byte NOP instruction.

In a development of the first aspect, the modified return operation is further defined such that the verification comprises determining whether a characteristic binary pattern corresponding to a call instruction is present in the predetermined position with respect to the return address.

In a development of the first aspect, the unique identifier for the function called by the call instruction comprises at least part of a hash of the function name.

In accordance with the present invention in a second aspect there is provided a computer program product, the computer program product comprising a computer-readable storage medium having computer executable instructions embodied therewith, the computer executable instructions being executable by a processor to cause the processor to perform the steps of the method of the first aspect.

In accordance with the present invention in a third aspect there is provided a computer program product, the computer program product comprising a computer-readable storage medium having computer executable instructions embodied therewith, the computer executable instructions being executable by a processor to cause the processor to perform a modified return operation defined such that when the modified return operation is executed, prior to returning to a return address stored for the modified return operation, a verification is performed to determine whether the instruction at the return address corresponds to a call instruction calling the function to which the respective instance of the modified return instruction belongs, and wherein the modified return operation only proceeds to return execution to the address stored for the modified return operation in a case where the instruction at the return address so corresponds to a call instruction.

In accordance with the present invention in a fourth aspect there is provided a computer system comprising: a memory having computer executable instructions and a dynamic program of an application; and a processor for executing the computer executable instructions, wherein execution of the computer executable instructions causes the processor to execute the steps of the method of the first aspect.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1: presents a flow chart of a method according to an embodiment;
- Figure 2: presents further implementation details in accordance with an embodiment;
- Figure 3: presents a flow chart of such a method; and
- Figure 4: presents a computer suitable for carrying out a method according to an embodiment.

### DETAILED DESCRIPTION OF THE INVENTION

Building on the prior art approaches described above, one might envisage an approach whereby anytime a function returns, the program will first verify that the return address corresponds to a valid return site. An address is considered to be a valid return site if the instruction preceding it is a call instruction. Thus, the idea of the policy is to make sure every return site is a valid one, if it is the program continues normally, otherwise, it will terminate.

Building on the hypothetical ROP attack presented above, a number of code lines have been added to the following code, indicated by the line numbers with a prime (`) suffix.

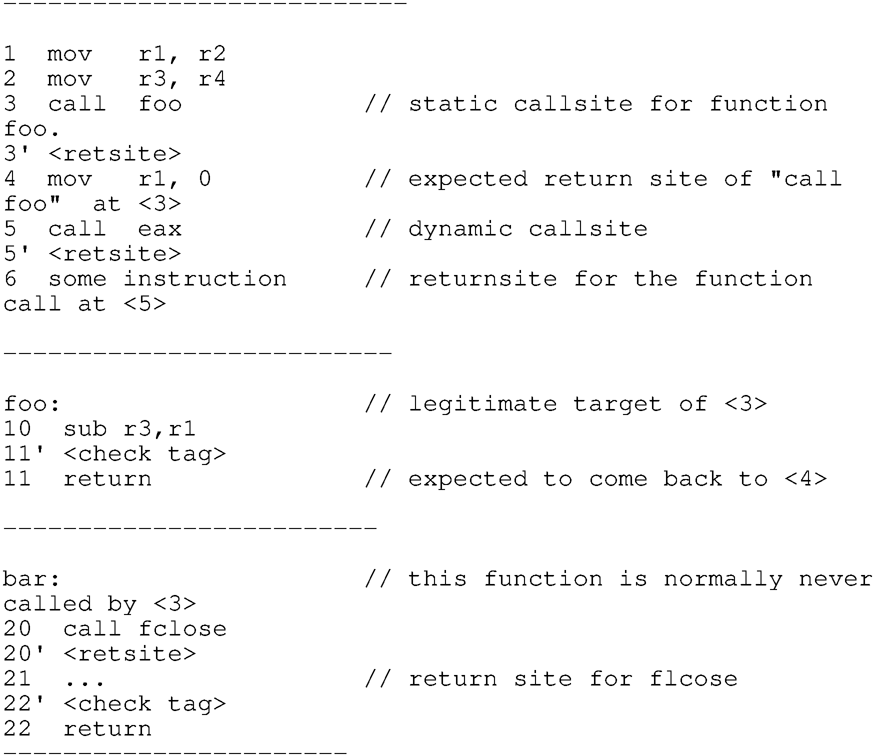

As can be seen, the protection consists in adding two types of additional instructions to the code (after the compilation stage, or within the compilation stage). Firstly, just after a call instruction, we insert a tag) for identifying return site, called <retsite>. Secondly, all the current return instructions are extended with an extra code checking the tag at the return address, denoted <check tag>.
- the <retsite> information indicates that the previous instruction is indeed a return. Technically speaking, a tag is simply a sequence of bytes chosen to not be a valid machine code instruction, that will be used as an identifier.
- the <check tag> code looks at the address where the return should go, check it is indeed a return site (thanks to <retsite> information). If yes, the normal return occurs (with some offset to avoid jumping directly on the tag itself), otherwise execution stops.

With such measures in place, the possible return addresses for the attacker are limited to <3'>, <5'>, <20'>, significantly reducing the exposure to attacks.

Embodiments build on this intermediate approach to propose a special protection against ROP attacks based on additional checks for direct calls, i.e. calls to a constant value. It is determined whether the return site is preceded by a call instruction, if so it is verified whether it is a direct call, and then it is ensured that the returning function was effectively the one called by the preceding call, limiting further the capacity of the attacker to redirect the control flow.

This approach may be performed with purely local information (context-free), in a stackless fashion. Two general considerations are pertinent (1) the return instruction must know the address of the function it belongs to- this is easily available at compile time and can be put in a tag next to the return, (2) the return site must make it easy to detect a static call and its associated constant function argument. Again this can be easily inserted in a tag at compile-time. Moreover, once inserted in the code, the corresponding checks will be efficient and do not depend in any way on the structure or size of the call stack. This might be realized for example by inserting at compile time either a tag at the return site, or some suitable code at the return instruction.

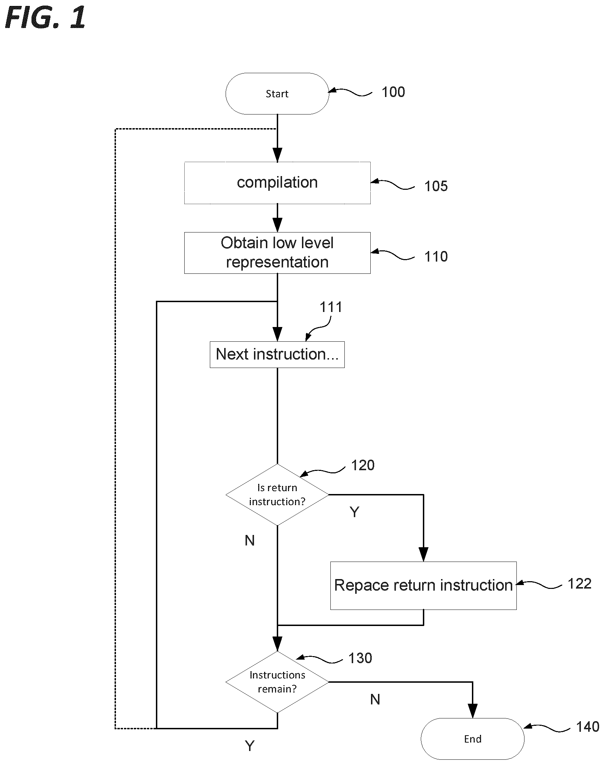

Figure 1 presents a flow chart of a method according to an embodiment.

In particular, there is provided a computer-implemented method for hardening software code against backward edge attacks.

The method begins at step 100 before proceeding to step 110 of obtaining a low level representation of the software code. As well known to the skilled person (see https://en.wikipedia.org/wiki/Low-level_programming language for example), a low level representation of software code may comprise a machine code or assembly language representation of the software code. It may also comprise a binary representation e.g. as executable code.

In such cases, an optional step 105 of performing a compilation operation on the software code may be performed to obtain the low level representation (in other embodiments, the compiled, or partially compiled code may be available as a starting point).

The method then proceeds to step 111 of selecting an instruction in the low level representation for consideration, and determining at step 120 if the selected instruction is a return instruction. If it is determined at step 120 that the instruction is a return instruction, the method then proceeds to step 122 of replacing a return operation in the assembly source code with a respective instance of a modified return operation. Otherwise, the method proceeds to step 130 as discussed below.

In accordance with embodiments, the modified return operation is defined such that when executed, prior to returning to a return address stored for the modified return operation, a verification is performed to determine whether the instruction at the return address corresponds to a call instruction calling the function to which the respective instance of the modified return instruction belongs, and only proceeds to return execution to the address stored for the modified return operation in a case where the instruction at the return address so corresponds to a call instruction.

The method determines at step 130 whether further return instructions remain to be processed, and in a case where call instructions remain, loops back to step 111 for the next instruction, or otherwise terminates at step 140.

Where a low level representation of the software code comprises a binary representation, the step of replacing may be implemented by a binary rewriting technique.

Further compilation, packaging, distribution etc. steps may then be performed to complete preparations for execution.

It will be appreciated that while the method of figure 1 is presented as a sequential identification and processing of call instructions; a parallel approach may also be adopted. Similarly, where the optional compilation step is performed, the entirety of the code may be compiled before processing at step 110 begins as shown, or alternatively the code may be compiled and processed in a piecemeal approach, e.g. on a library by library, module by module or even line by line basis, in which case after performing a replacement at step 122, the method may loop back to step 105 to compile the next section of code for processing. Steps 111, 120, 130 are presented explicitly for the sake of clarity, but it will be appreciated that in real implementations these operations may be incorporated implicitly in the overall method structure.

This approach minimizes further the number of possible gadgets. It builds upon the prior art by adding an additional check for direct calls, i.e. calls to a constant value. For this policy, similarly, we check if the return site is preceded by a call instruction, if so we check if it is a direct call, and we make sure that the returning function was effectively the one called by the preceding call, limiting further the capacity of the attacker to redirect the control flow. In accordance with embodiments, this can be achieved using purely local information (context-free), in a stackless fashion.

It will be noted that specific implementations are dependent on the low level format required by the specific computer architecture on which the code is to be executed, and thus concern technical considerations of the internal functioning of the computer.

This approach always allows a return instruction to go to the return site of a dynamic call, yet it restricts the possibilities of jumping to return sites of static call instructions. in the worst case where all calls are dynamic the benefits are the same as the intermediate approach presented above, while it behaves as a shadow stack in the very favourable case where all call are static and each function has a unique static caller.

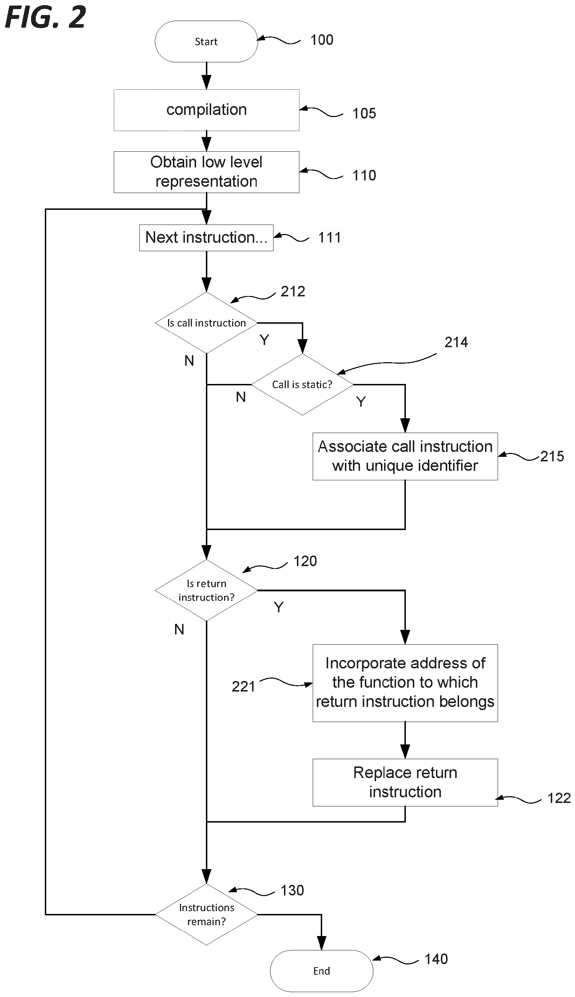

Figure 2 presents further implementation details in accordance with an embodiment,

Figure 2 incorporates the steps 100, 105, 110, 120, 122, 130 and 140 as described with reference to figure 1.

Furthermore, as shown, subsequent to step 110 there is performed as step 212 of determining for the selected instruction whether it is a call instruction, and where the instruction is a call instruction, determining whether the call is a static call at step 214, and in a case where a the call instruction is determined to be a static call, associating the call instruction with a unique identifier for the function called by the call instruction at step 215. If it is determined that a call is not static, the method may loop to step 120. The other variants discussed with respect to figure 1 apply mutatis mutandis to the embodiment of figure 2.

The method then proceeds to step 120 as described above. In a case where an instruction is determined to be a return instruction at step 120, in accordance with the embodiment of figure 2 the method proceeds to step 221 of incorporating in the respective instance of the modified return operation a representation of the address of the function to which the return belongs on the basis of the unique identifier associated with the respective call instruction at step 215. In the loop structure of figure 2 this may imply an additional step of identifying the static target function f of the call for each return instruction belonging to function f, however in other logical sequences, this may not be required as an explicit step.

On this basis, the modified return operation is further defined such that the verification comprises determining whether the call instruction is a static call instruction by determining whether the unique identifier for the function associated with the call instruction corresponds to the function to which the instance of the modified return operation belongs, and in a case where the verification determines that the instruction at the return address is a static call instruction, comparing the address defined in the static call instruction with the address of the function to which the instance of the modified return operation belongs. As such, the modified return operation may then only proceed to return execution to the address stored for the modified return operation in a case where the static address of the function called by the call instruction with the address of the function to which the instance of the modified return operation belongs.

It will be appreciated that the steps of figure 2 may be performed in alternative sequences - steps 212, 214 and 215 on one hand and 120, 221, 122 on the other may be inverted, or performed in parallel. Step 214 may performed for all call instructions, regardless of whether they are static or dynamic..

Steps 111, 120, 122, 130, 212, 214, 215 are presented explicitly for the sake of clarity, but it will be appreciated that in real implementations these operations may be incorporated implicitly in the overall method structure.

As such, this approach calls for two ingredients: (1) the return instruction knows the address of the function it belongs to - this is easily available at compilation and can be put in a tag next to the return, (2) the return site makes it easy to detect a dynamic call and its associated constant function argument. Once inserted in the code, the corresponding checks will be efficient and do not depend in any way on the structure or size of the call stack.

### Tagged approach

A number of specific implementations may be envisaged. One possible approach relies on adding prior to run time, e.g. at compilation, a "tag" to each static call, such that its validity can be easily verified by the modified return operation at run time whether the indicated return operation is trustworthy.

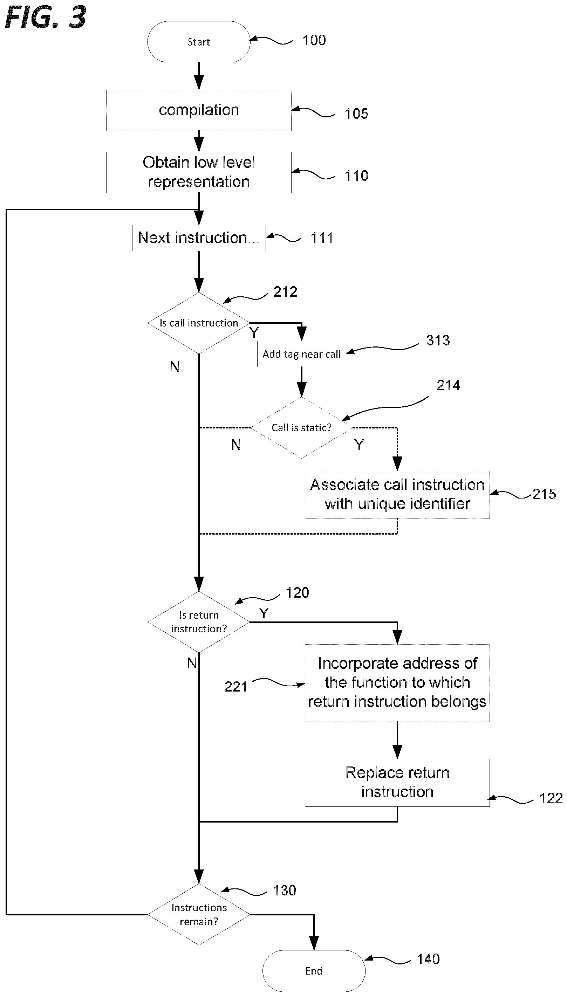

Figure 3 presents a flow chart of such a method.

The method of figure 3 comprises the same steps 105, 110, 111, 120, 130, 140 and optional steps 212, 213, 214 and 217 as discussed above.

In accordance with the method of figure 3, where a call instruction is identified at step 212 the method proceeds at step 313 to add a tag constituting a characteristic data element in a predetermined position with respect to the call instruction.

By way of example, the characteristic data element may be embedded in a multi-byte NOP instruction.

The predetermined position preferably immediately precedes the respective call instruction.

As shown the method then resumes at step 214 or 120 as discussed above.

In such embodiments, the modified return operation is further defined such that the verification comprises determining whether the characteristic data element is present in the predetermined position with respect to the return address.

It will be appreciated that while as shown call instructions are processed sequentially, they may equally be processed in parallel. Similarly, while as shown the processing of call instructions is performed after the processing of return instructions, it will generally be more efficient to handling both processing steps in parallel, parsing the code set once for both categories of replacement.

The variants discussed with respect to the implementations of figure 1 or 2 above may be adapted mutatis mutandis to the approach of figure 3.

In accordance with this approach, the modified return operation inserted at step 122 is further defined such that the verification comprises determining whether the characteristic data element is present in the predetermined position with respect to the return address.

As such, this approach checks that the returning function is indeed the one that was called by the call instruction at the return site, adding a unique tag at the return site corresponding to the function being called. The tag may be composed for example of any fixed-length hash of the function name, or any ordering of function names. For example, the address corresponding to the function name the first 32 bits of the function name's SHA256 hash.

In implementation catered toward the x86 architecture for example, tags may conveniently be embedded in a multi-byte nop instruction. The multibyte nop instruction does not alter the content of a register and will not issue a memory operation. The encoding of a multibyte nop instruction as defined in the Intel Manual Vol. 2B 4-163 (https://www.intel.com/content/dam/www/public/us/en/documents/manuals/64-ia-32-architectures-software-developer-vol-2b-manual.pdf) specifies a format 0f 1f 80 + XX XX XX where the final bytes can be defined arbitrarily. By way of example one might choose "CALLBEF0", which in hexadecimal gives CA 11 BE F0, or in a little-endian sequence f0 be 11 ca. Accordingly, In the case of direct call, the tag 0xCALLBEF0 might be inserted as byte 0x0f, 0x1f, 0x80, 0xf0, 0xbe, 0x11, 0xca and in the case of an indirect call the tag 0xCALLBEF1 might be inserted.

This is easily portable to other architectures by for example: jump <data byte> normal code; Before every return instruction.
e.g.

```
 jmp label                        # jump to label forward
 .byte 0xf0, 0xbe, 0x11, 0xca # tag -- interleaved data that will be skipped by jump above
 label:                            # jump label
 normal code
 
```

This approach makes it possible to add a number of bytes (as many as required) ahead of the code of interest.

It is checked before the function returns, and has the returning function's tag statically added in the check at compile-time. This check is only performed for direct calls because direct calls enable us to know what function will be called by the call instruction at compile-time. For the tagged approach, two tags are used to differentiate between direct and indirect calls, 0xCALLBEF0 for direct calls and 0xCALLBEF1 for indirect calls.

This check further reduces the number of available gadgets to an attacker, as the large majority of aligned call instructions are direct. All the direct-call-preceded gadgets are now unavailable, or at least very hard to chain.

It may be noted that a function protected in this manner called by an unprotected function will cause an undue termination, as the callee will expect a tag that is not there. In order to solve this issue, all external libraries should be compiled locally and implement the same policy.

By way of an example of the method described with reference to figure 3, building on the hypothetical ROP attack presented above, a number of further additional code lines have been added to the following code, indicated by the line numbers with a prime (`) suffix.

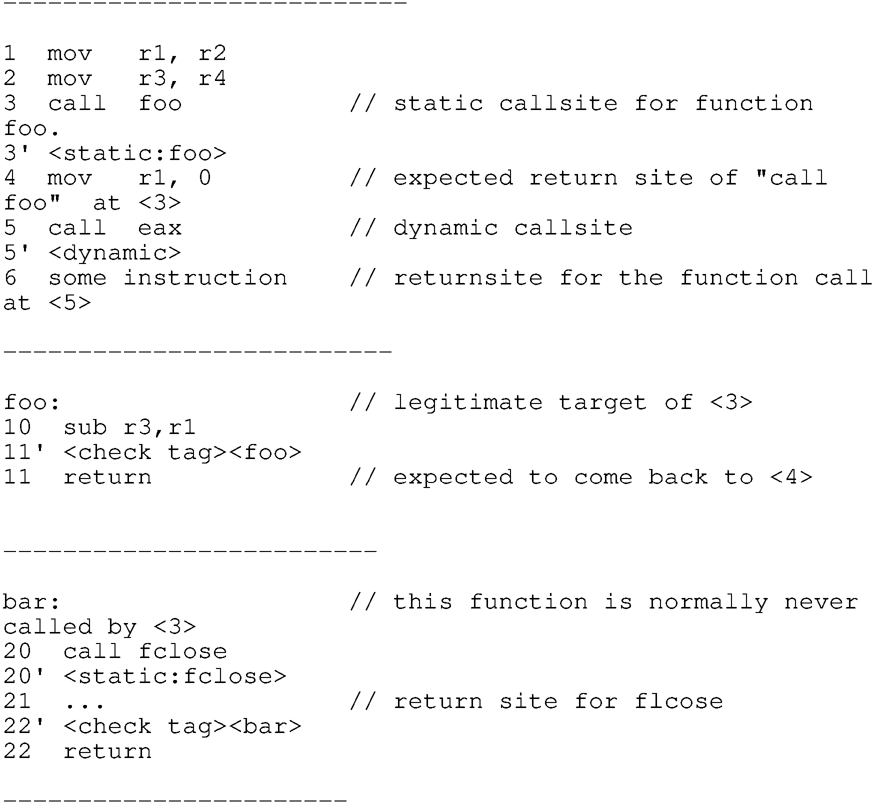

- <retsite> now carries the information whether the prior call is static (with the address of the called function: <static><a>) or dynamic (<dynamic>)
- <check tag> has the information of the function address it belongs

In accordance with this approach, the modifications made prior to run time as discussed above are complemented by the functions of the modified return instruction.

In operation, <check tag> looks at the address where the return should go, and checks whether it is indeed a return site (thanks to <retsite> information).

```
  If yes, then
     if the call is dynamic then return occurs
       else // the call is static
      if the address called by the static call (i.e., the "addr" information in the
 <retsite><static:addr>) is the one recorded for the <check tag><addr> then return
 occurs
        else execution stops
   else execution stops.
```

Possible return addresses for the attacker: only after a call, and returnsites from static call must match the expected function call address. Here: <3'>, <5'>

In comparison with the prior art example, this approaches remove another false return address, as with this policy <11> cannot go to <20'>

Adding such tags allows to have simple and concise <check tag> code, but may come with compatibility issues, for example a protected code may not be able to call a non protected library, as the library function would return back inside the <retsite> tag.

Although as shown the embodiment of figure 3 additionally incorporates the steps 214, 215, 221 introduced with the embodiment of figure 2, it will be appreciated that these steps are not required for the introduction of a characteristic data element at step 313 to be meaningful, and as such are optional. It will be similarly appreciated that insofar as steps 214 and 215 are retained, they may be performed in any sequence with respect to step 313.

### Tagless approach

Another possible approach relies on incorporating test functions in the modified return operation capable of determining from the known generic characteristics of call functions in the low level code representation in question, rather than adding special tags, as discussed above, such that the modified return operation can independently determine at run time whether the indicated return operation is trustworthy.

In contrast to the approach of figure 3, this alternative approach does not imply any modification to the source code functions themselves, but rather depends solely on the definition of a "ret" instruction with the requisite capabilities, as set out below.

In this approach, the modified return instruction parses the binary code preceding the return address to check if a return site is properly call-preceded. For example, on an x86 architecture this may be achieved by checking the 7 bytes preceding the return address and attempting to match them to a pattern corresponding to a call instruction. The Intel manual defines this as : E8 cd (direct call), or FF /2 (indirect call). A regex to match both patterns might look as follows:
in hexadecimal byte representation:
(0x*e*8[0x00 - 0x*f f* ]{4}) | (0x*f f* [0x*d*0 - 0x ]) |
(0x*f f* [0x10 - 0x1 ] [0x00 - 0x*f f* ]?) |
(0x*f f* [0x50 - 0x5 ] [0x00 - 0x*f f* ]{1, 2}) I
(0x*f f* [0x90 - 0x9 ] [0x00 - 0x*f f* ]{4, 5})$

This method of matching may necessitate in an exemplary embodiment in the order of 25 assembly instructions instead of 5 (if we count the tag) for the tagged approach,

This is true for the worst case only since the most frequent opcode may be prioritized in the pattern matching, leading to fewer comparisons in practice.

Moreover, foregoing the need for tags makes this method compatible with any linked shared library or executable. It can be linked with any proprietary code even when one does not have access to the source code and also foregoes the need to recompile every library the code uses or is used by. It may nevertheless be borne in mind that the unprotected code itself can still be subject to ROP exploits.

If a direct call is detected, the call offset is retrieved to find the start address of the called function. This is simple, as direct call instructions are encoded with relative addresses: call [rel32].

If Addr is the address of the call instruction, the start address of the called function is then calculated as Addr+rel32. It then verifies that the found function start address matches the returning function start address (added at compile-time).

As such, the method discussed with reference to figures 1 or 2 may be modified insofar as the modified return operation is further defined such that the verification comprises determining whether a characteristic binary pattern corresponding to a call instruction is present in the predetermined position with respect to the return address.

This logic may be rendered in pseudocode as: 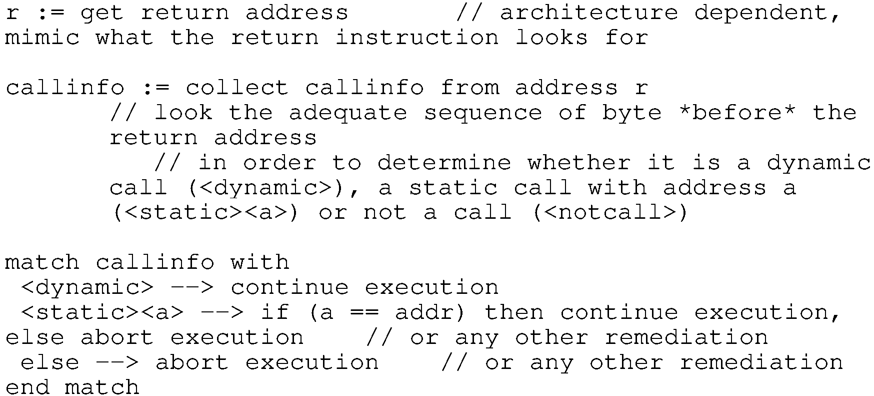
- <retsite> tags are no longer present in the instrumented code
- the <check tag> operation becomes more complicated: instead of simply checking whether the return address indeed contains a given sequence of bytes, it must now embed all the code for checking whether the return address is indeed a call / dynamic call / static call, according to the specification of the current machine code, and retrieve the call address in the case of static calls. This is only parsing sequences of bytes according to a given machine instruction documentation.

Accordingly, a method is provided for hardening low level software code against Return-oriented programming attacks. It builds by modifying calls and return functions so as to enable a check for direct calls to verify that that the returning function was effectively the one called by the preceding call, limiting the capacity of the attacker to redirect the control flow. This may in particular involve associating calls with special tags whose presence and value can be checked by the return function, or by a tagless approach in which the return function is defined so as to look for characterizing features of a call function in a predetermined position with respect to the call instruction, based on known structures for the applicable computer architecture.

Software embodiments include but are not limited to application, firmware, resident software, microcode, etc. The invention can take the form of a computer program product accessible from a computer-usable or computer-readable medium providing program code for use by or in connection with a computer or an instruction execution system. Software embodiments include software adapted to implement the steps discussed above with reference to figures 1 to 3 as well as the tagless approach described above. Embodiments may take the form of a computer program product, comprising a computer-readable storage medium having computer executable instructions embodied therewith, the computer executable instructions being executable by a processor to cause the processor to perform the steps of a method as described above.

Embodiments may take the form of computer program product, the computer program product comprising a computer-readable storage medium having computer executable instructions embodied therewith, the computer executable instructions being executable by a processor to cause the processor to perform a modified return operation defined in accordance with any of the preceding embodiments. Embodiments may take the form of a computer system comprising a memory having computer executable instructions and a dynamic program of an application; and a processor for executing the computer executable instructions, wherein execution of the computer executable instructions causes the processor to execute the steps of any method as described above.

A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a computer system. These methods and processes may be implemented by computer-application programs or services, an application-programming interface (API), a library, and/or other computer-program product, or any combination of such entities.

For example, the computer system may comprise one or more physical logic devices configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result, in particular to implement certain of the operations described above, for example with reference to figures 1 to 3 as well as the tagless approach described above.

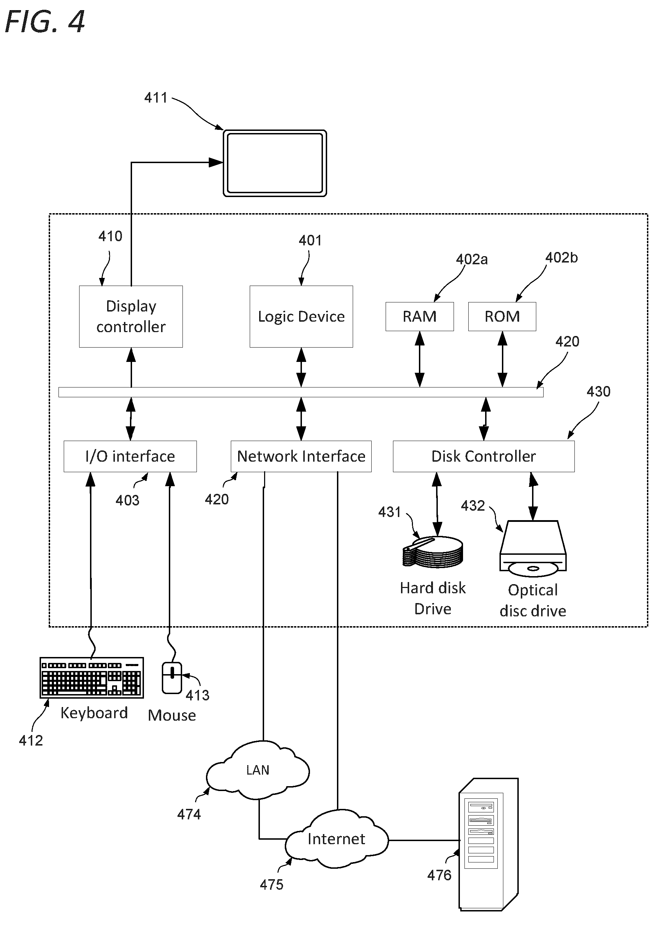

Figure 4 presents a computer suitable for carrying out a method according to an embodiment.

In figure 4, the computer includes a Central Processing Unit (CPU) 401 which may perform the method steps described above while running an executable program, i.e. a set of computer-readable instructions, stored in a memory device such as RAM 402a or ROM 402b or hard disk drive 431, DVD/CD drive 432, or stored remotely. Moreover, one or more computer files defining the spatial relations graphs, and computer files comprising the virtual space and objects defined therein, may also be stored on one or more of memory devices 402a, 402b, 431, 432, or remotely.

The claimed invention is not limited by the form of the computer-readable media on which the computer-readable instructions of the inventive process are stored. For example, the instructions and files can be stored on CDs, DVDs, in FLASH memory, RAM, ROM, PROM, EPROM, EEPROM, hard disk or any other information processing device with which the computer communicates, such as a server or computer. The program can be stored on a same memory device or on different memory devices.

Further, a computer program suitable for carrying out the inventive method can be provided as a utility application, background daemon, or component of an operating system, or combination thereof, executing in conjunction with CPU 1101 and an operating system such as Microsoft XP, Microsoft Windows 10, UNIX, Solaris, LINUX, Apple MAC-OS and other systems known to those skilled in the art.

CPU 401 can be a Xenon processor from Intel of America or a Ryzen processor from AMD of America, or can be other processor types, such as a Freescale ColdFire, IMX, or ARM processor from NXP Semiconductors. Alternatively, the CPU can be a processor such as a Core from Intel Corporation of America, or can be implemented on an FPGA, ASIC, PLD or using discrete logic circuits, as one of ordinary skill in the art would recognize. Further, the CPU can be implemented as multiple processors cooperatively working to perform the computer-readable instructions of the inventive processes described above.

The computer may include a network interface 420, such as an Intel Ethernet PRO network interface card from Intel Corporation of America, for interfacing with a network, such as a local area network (LAN) 474, wide area network (WAN), the Internet 475 and the like. The method may be implemented remotely, by means of a web application, e.g. operating on remote server 476.

The computer further includes a display controller 410, such as a NVIDIA GeForce RTX graphics adaptor from NVIDIA Corporation of America for interfacing with display 411. A general purpose I/O interface 403 interfaces with a keyboard 412 and pointing device 413, such as a roller ball, mouse, touchpad and the like. The display, the keyboard, the sensitive surface for the touch mode and the pointing device, together with the display controller and the I/O interfaces, form a graphical user interface, used by the user to provide input commands.

Disk controller 430 connects HDD 431 and DVD/CD 432 with communication bus 420, which can be an ISA, EISA, VESA, PCI, or similar, for interconnecting all of the components of the computer.

A description of the general features and functionality of the display, keyboard, pointing device, as well as the display controller, disk controller, network interface and I/O interface is omitted herein for brevity as these features are known.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The examples described above are given as non-limitative illustrations of embodiments of the invention. They do not in any way limit the scope of the invention which is defined by the following claims.

## Claims

1. A computer-implemented method for hardening software code against backward edge attacks comprising:
obtaining a low level representation of said software code,
replacing all return operations in said low level representation with a respective instance of a modified return operation defined such that when said modified return operation is executed, prior to returning to a return address stored for said modified return operation, a verification is performed to determine whether the instruction at said return address corresponds to a call instruction calling the function to which the respective instance of the modified return instruction belongs, and wherein said modified return operation only proceeds to return execution to said address stored for said modified return operation in a case where the instruction at said return address so corresponds to a call instruction.

2. The method of claim 1 wherein said low level representation of said software code comprises one a machine code representation of said software code, an assembly language representation of said software code.

3. The method of claim 1 wherein said low level representation of said software code comprises or a binary representation of said software code, and wherein said step of replacing is implemented by a binary rewriting technique.

4. The method of any preceding claim comprising a further step of performing a compilation operation on said software code to obtain said low level representation.

5. The method of any preceding claim comprising the further steps of
incorporating in each instance of said modified return operation a representation of the address of the function to which said instance belongs, and
determining for each call instruction whether said call is a static call, and in a case where a said call instruction is determined to be a static call, associating said call instruction with a unique identifier for the function called by said call instruction, and
wherein said modified return operation is further defined such that said verification comprises determining whether the call instruction is a static call instruction by determining whether the unique identifier for the function associated with the call instruction corresponds to the function to which the instance of the modified return operation belongs, and in a case where said verification determines that the instruction at said return address is a static call instruction,
comparing the address defined in said static call instruction with the address of the function to which the instance of the modified return operation belongs,
and wherein said modified return operation only proceeds to return execution to said address stored for said modified return operation in a case where the static address of the function called by said call instruction corresponds with the address of the function to which the instance of the modified return operation belongs.

6. The method of any preceding claim comprising a further step of identifying all call instructions in said low level representation, and adding a characteristic data element in a predetermined position with respect to each said call instruction, and wherein said modified return operation is further defined such that said verification comprises determining whether said characteristic data element is present in said predetermined position with respect to said return address.

7. The method of claim 6 wherein said predetermined position immediately precedes the respective said call instruction.

8. The method of claim 6 or 7 wherein said characteristic data element is embedded in a multi-byte NOP instruction.

9. The method of any of claims 1 to 5 wherein said modified return operation is further defined such that said verification comprises determining whether a characteristic binary pattern corresponding to a call instruction is present in said predetermined position with respect to said return address.

10. The method of claim 9 wherein said unique identifier for the function called by said call instruction comprises at least part of a hash of the function name.

11. A computer program product, the computer program product comprising a computer-readable storage medium having computer executable instructions embodied therewith, the computer executable instructions being executable by a processor to cause the processor to perform the steps of the method of any of claims 1 to 10.

12. A computer program product, the computer program product comprising a computer-readable storage medium having computer executable instructions embodied therewith, the computer executable instructions being executable by a processor to cause the processor to perform a modified return operation defined such that when said modified return operation is executed, prior to returning to a return address stored for said modified return operation, a verification is performed to determine whether the instruction at said return address corresponds to a call instruction calling the function to which the respective instance of the modified return instruction belongs, and wherein said modified return operation only proceeds to return execution to said address stored for said modified return operation in a case where the instruction at said return address so corresponds to a call instruction.

13. A computer system comprising:
- a memory having computer executable instructions and a dynamic program of an application; and
- a processor for executing the computer executable instructions, wherein execution of the computer executable instructions causes the processor to execute the steps of the method of any of claims 1 to 10.
